# EUROPÄISCHE PATENTSCHRIFT

(11) **EP 0 849 285 B1**
(45) Veröffentlichungstag und Bekanntmachung des Hinweises auf die Patenterteilung: **13.08.2003**
(21) Anmeldenummer: 97122067.8
(22) Anmeldetag: 15.12.1997
(51) Int. Cl.: C08F 2/34, C08F 10/00, B01J 8/24, B01J 8/00, B01J 8/10, B01J 19/18

(54) **Verfahren zur Gasphasenpolymerisation von C2-C8-Alk-1-enen mittels Ziegler-Natta- oder Metallocen-Katalysatorsystemen**
Gas phase polymerization process of C2-C8-alk-1-enes using a Ziegler-Natta- or a metallocene catalyst
Procédé de polymérisation en phase gazeuse de 1-alcènes en C2-C8 utilisant un catalyseur Ziegler-Natta ou métallocene

(30) Priorität: 19.12.1996 DE 19653079
(43) Veröffentlichungstag der Anmeldung: 24.06.1998
(73) Patentinhaber: Novolen Technology Holdings C.V., 2596 JJ Den Haag (NL)
(72) Erfinder: Kersting, Meinolf, Dr., 67435 Neustadt (DE); Werner, Rainer Alexander, Dr., 67098 Bad Dürkheim (DE); Langhauser, Franz, Dr., 67152 Ruppertsberg (DE); Lutz, Gerald, Dr., 64295 Darmstadt (DE)
(74) Vertreter: De Hoop, Eric, Drs.

(56) Entgegenhaltungen:
- EP-A- 0 038 478
- EP-A- 0 749 992
- WO-A-95/22565
- WO-A-97/03044
- DE-A- 2 049 622

## Beschreibung

Die vorliegende Erfindung betrifft ein Verfahren zur Homo- oder Copolymerisation von C₂-C₈-Alk-1-enen mittels eines Ziegler-Nattaoder eines Metallocen-Katalysatorsystems in einem gerührten Bett aus feinteiligem Polymerisat aus der Gasphase, wobei der übergangsmetallhaltige Katalysatorfeststoff des Ziegler-Natta- oder Metallocen-Katalysatorsystems durch in den Reaktor dosiertes C₂-C₈-Alk-1-en dem Reaktor zugeführt wird.

Außerdem betrifft die vorliegende Erfindung eine Vorrichtung zur Polymerisation von C₂-C₈-Alk-1-enen.

Polymerisate von C₂-C₈-Alk-1-enen können sowohl durch Flüssigphasenpolymerisation als auch durch Polymerisation einer Aufschlämmung oder durch Gasphasenpolymerisation hergestellt werden. Aufgrund der leichten Abtrennbarkeit des entstehenden festen Polymerisats vom gasförmigen Reaktionsgemisch wird in zunehmendem Maß aus der Gasphase heraus polymerisiert. Die Polymerisation wird dabei mit Hilfe eines Ziegler-Natta-Katalysatorsystems durchgeführt, welches üblicherweise aus einer titanhaltigen Feststoffkomponente, einer organischen Aluminiumverbindung und einer organischen Silanverbindung besteht (EP-B 45 977, EP-A 171 200, US-A 4 857 613, US-A 5 288 824). Es können aber auch Ziegler-Natta-Katalysatoren auf der Basis von Metallocenkatalysatorsystemen eingesetzt werden. Derartige Metallocenkatalysatorsysteme sind u.a. aus der DE-A 41 30 299 bekannt.

Die DE-A 20 49 622 lehrt ein Verfahren zur Polymerisation von u.a. C₂-C₆-Alk-1-enen in der Gasphase in Anwesenheit von Polymerisationskatalysatoren, bei dem die gasförmigen Monomeren kontinuierlich der Gasphase entzogen, in einem in sich geschlossenen System kondensiert, gespeichert und in flüssiger Form in geregelten Mengen über eine Pumpe wieder zugeführt werden.

In der EP-A 38 478 wird eine bevorzugte Ausführungsform des in der DE-A 20 49 622 beschriebenen Polymerisationsverfahrens offenbart, wobei die Herstellung der Homo- oder Copolymerisate in einem zentrischen Rührbett erfolgt, das bestimmte geometrische Bedingungen erfüllt. Weitere Ausführungsformen des o.g. Verfahrens werden in der EP-A 67 359 und EP-A 360 094 beschrieben.

Mit Hilfe dieser Verfahren ist es möglich, auf wirtschaftliche Weise eine Vielzahl von Homo- oder Copolymerisation von C₂-C₈-Alk-1-enen herzustellen, die gute anwendungstechnische Eigenschaften aufweisen. Allerdings hat sich gezeigt, daß die Einmischung des in sehr geringen Mengen in den Reaktor dosierten übergangsmetallhaltigen Katalysatorfeststoffs in das Rührbett noch unzulänglich ist. Nachteile die daraus entstehen, sind eine inhomogene Temperaturverteilung innerhalb des Rührbetts und das Auftreten von sogenannten "hot spots", also Stellen mit teilweise sehr hohen lokalen Temperaturen. Insbesondere durch hohe lokale Temperaturen wird das Katalysatorsystem irreversibel geschädigt und verliert einen Teil seiner Aktivität.

Der vorliegenden Erfindung lag daher die Aufgabe zugrunde, den geschilderten Nachteilen abzuhelfen und ein Verfahren zu entwickeln, welches eine wesentlich bessere Einmischung des übergangsmetallhaltigen Katalysatorfeststoffs ermöglicht.

Demgemäß wurde ein neues Verfahren zur Homo- oder Copolymerisation von C₂-C₈-Alk-1-enen mittels eines Ziegler-Natta- oder eines Metallocen-Katalysatorsystems in einem gerührten Bett aus feinteiligem Polymerisat aus der Gasphase gefunden, wobei der übergangsmetallhaltige Katalysatorfeststoff des Ziegler-Nattaoder Metallocen-Katalysatorsystems durch in den Reaktor dosiertes C₂-C₈-Alk-1-en dem Reaktor zugeführt wird, das dadurch gekennzeichnet ist, daß man den übergangsmetallhaltigen Katalysatorfeststoff zusammen mit mindestens einem Teil des C₂-C₈-Alk-1-ens durch ein oder mehrere Rohre, die senkrecht oder nahezu senkrecht von oben in den Gasraum hineinragen und oberhalb des pulverförmigen Reaktorbetts enden, dem Reaktor zugibt und dabei den vertikalen Abstand zwischen dem oder den Rohrenden und dem pulverförmigen Reaktorbett auf weniger als 15 %, insbesondere weniger als 10 % des Abstandes zwischen dem oberen Reaktorende und der Oberfläche des gerührten pulverförmigen Reaktorbetts einstellt. Radial gesehen enden das oder die Eintragsrohr(e) in der Mitte des Reaktors oder leicht exzentrisch in der Weise, daß der horizontale Abstand zwischen dem oder den Rohrenden und der Reaktormitte weniger als 20 %, bevorzugt weniger als 15 %, des Radius des Reaktors beträgt.

Das erfindungsgemäße Verfahren wird in einem Gasphasenreaktor durchgeführt, der mit einem pulverförmigen Reaktionsbett aus feinteiligem Polymerisat gefüllt ist, das durch einen Rührer in Bewegung gehalten wird, wobei sogenannte frei tragende Wendelrührer besonders gut geeignet sind. Derartige Rührer sind u.a. aus der EP-B 000 512 und der EP-B 031 417 bekannt. Sie zeichnen sich insbesondere dadurch aus, daß sie das pulverförmige Reaktionsbett sehr homogen verteilen. Beispiele für solche pulverförmigen Reaktionsbette sind in der EP-B 038 478 beschrieben. Vorzugsweise weisen die kesselförmigen, mit einem Rührer versehenen Reaktoren einen Rauminhalt von 0,1 bis 100 m³, beispielsweise 12,5, 25, 50 oder 75 m³, auf.

Im erfindungsgemäßen Verfahren wird der übergangsmetallhaltige Katalysatorfeststoff durch einen Teilstrom oder die Gesamtmenge des in den Reaktor dosierten C₂-C₈-Alk-1-ens dem Reaktor zugeführt. Die Zugabe erfolgt durch ein oder mehrere Rohre, die senkrecht oder nahezu senkrecht von oben in den Gasraum der Polymerisationsreaktors hineinragen und oberhalb des pulverförmigen Reaktorbetts enden. Die Neigung der Rohre gegen die Senkrechte (Reaktormitte) sollte geringer als 30° sein und bevorzugt weniger als 20° betragen. Der übergangsmetallhaltige Katalysatorfeststoff wird durch eine geeignete Vorrichtung dem Monomerstrom hinzugefügt und dann durch diesen mittels des oder der erfindungsgemäß ausgeführten Rohre von oben auf das Pulverbett dosiert.

Eine besonders bevorzugte Ausführungsform des erfindungsgemäßen Verfahrens ist in der nachfolgenden Figur schematisch dargestellt. In einem Rührreaktor (1), der mit einem feinteiligen Reaktionsbett (2) gefüllt ist, das aus festen Polymerteilchen beispielsweise einer Teilchengröße von 0,05 bis 10 mm besteht, und mit einem frei tragenden Wendelrührer (3) versehen ist, werden C₂-C₈-Alk-1-ene homo- oder copolymerisiert. Nicht verbrauchte, gasförmige Monomere werden aus dem Kopf des Reaktors, d.h. am oberen Reaktorende, zunächst über einen Reaktordom (5) abgezogen und anschließend jeweils über ein Kreisgasfilter (6) von mitgerissenen Polymerisatteilchen abgetrennt. Danach werden die Monomere mit Hilfe eines Wärmetauschers (7) verflüssigt und über eine Pumpe (8) wieder in den Reaktor (1) als Flüssigkeiten bzw. als Zweiphasengemisch eingebracht, wo sie unter den gegebenen Bedingungen rasch verdampfen. Durch diese Kreisgasführung verbunden mit der Verdampfungskühlung durch die flüssig eingebrachten Monomere gelingt es, die bei der Polymerisation entstehende Reaktionswärme rasch abzuführen und für eine gute Durchmischung des pulverförmigen Reaktionsbetts mit Monomeren zu sorgen.

Um verbrauchte Monomere zu ersetzen, werden dem Reaktor frische C₂-C₈-Alk-1-ene zugeführt. Diese können als ein Gesamtstrom oder als mehrere Teilströme in den Reaktor dosiert werden, wobei in dieser besonders bevorzugten Ausführungsform des erfindungsgemäßen Verfahrens der übergangsmetallhaltige Katalysatorfeststoff entweder dem Gesamtstrom oder einem Teilstrom des frisch zugeführten C₂-C₈-Alk-1-ens zugegeben wird.

Die Rührbewegung des frei tragenden Wendelrührers (3) bewirkt eine Rotation des feinteiligen Reaktionsbetts. Durch die besondere Ausführung des Rührers wird dieser radialen Bewegung der Polymerteilchen noch eine horizontale überlagert, bei der das kleinteilige Polymerisat im peripheren Bereich des Rührbetts nach oben und im zentralen Bereich des Rührbetts nach unten bewegt wird. Hierdurch bildet sich in der Mitte des Reaktors eine trichterförmige Mulde im Reaktionsbett (2) aus. Der den übergangsmetallhaltigen Katalysatorfeststoff enthaltende C₂-C₈-Alk-1-en-Strom wird durch die Rohre (4) und/oder (4') in den Reaktor dosiert, wobei deren Ende(n) entweder zentrisch auf die Mitte des Trichters oder leicht exzentrisch auf den Trichterrand gerichtet sind.

Das erfindungsgemäße Verfahren kann in einem einzelnen Gasphasenreaktor durchgeführt werden. Es ist aber auch möglich, eine Kaskade aus Gasphasenreaktoren zu verwenden. Dann wird in der Regel der übergangsmetallhaltige Katalysatorfeststoff nur in den ersten Reaktor dosiert und dann in noch aktiver Form zusammen mit dem in dem ersten Reaktor gebildetem Polymerisat und nicht umgesetztem Monomer in den nächsten Reaktor der Kaskade überführt. Es ist aber auch möglich in weitere oder jeden Reaktor der Kaskade nochmals Katalysatorfeststoff zu dosieren.

Unter der ebenfalls erfindungsgemäßen Vorrichtung ist ein Reaktor zur Polymerisation von C₂-C₈-Alk-1-enen in einem gerührten Bett aus feinteiligem Polymerisat aus der Gasphase oder eine Kaskade aus solchen Reaktoren zu verstehen, wobei mindestens einer der Reaktoren mindestens ein senkrecht von oben oder nahezu senkrecht von oben in den Gasraum hineinragendes Rohr aufweist, und dieses Rohr oberhalb des gerührten pulverförmigen Reaktorbetts endet, wobei das oder die Rohre so ausgeführt sind, daß sie mit C₂-C₈-Alk-1-enen durchströmt werden können und sie mit einer geeigneten Vorrichtung zur Zugabe von übergangsmetallhaltigen Katalysatorfeststoffen zu dem C₂-C₈-Alk-1-enstrom ausgerüstet sind.

Das erfindungsgemäße Verfahren eignet sich zur Polymerisation von C₂-C₈-Alk-1-enen mit Hilfe eines Ziegler-Natta- oder Metallocen-Katalysatorsystems. Als C₂-C₈-Alk-1-ene werden dabei insbesondere Ethylen, Propylen, But-1-en, Pent-1-en, Hex-1-en, Hept-1-en oder Oct-1-en verstanden, wobei Ethylen, Propylen oder But-1-en bevorzugt eingesetzt werden. Besonders eignet sich das erfindungsgemäße Verfahren zur Herstellung von Homopolymerisaten des Propylens und von Copolymerisaten des Propylens mit bis zu 30 Gew.-% einpolymerisierter anderer C₂-C₈-Alk-1-ene.

Bevorzugt werden mit dem erfindungsgemäßen Verfahren Propylenhomopolymerisate oder statistische Copolymerisate des Propylens mit bis zu 15 Gew.-% anderer C₂-C₈-Alk-1-ene hergestellt. Ebenso bevorzugt ist die Herstellung sogenannter Block- oder Impactcopolymerisate des Propylens in einem mindesten zweistufigen Prozeß, bei dem in der ersten Stufe Propylen homopolymerisiert oder mit bis zu 15 Gew.-% anderer C₂-C₈-Alk-1-ene copolymerisiert wird und in der zweiten Stufe ein Propylen-Ethylen-Copolymerisat mit Ethylengehalten zwischen 15 und 80 Gew.-%, das zusätzlich noch weitere C₂-C₈-Alk-1-ene enthalten kann, hinzupolymerisiert wird.

Als Polymerisationskatalysatoren eignen sich im erfindungsgemäßen Verfahren Ziegler-Natta-Katalysatorsysteme oder Metallocen-Katalysatorsysteme. Dabei werden insbesondere solche Katalysatorsysteme verwendet, die neben einer übergangsmetallhaltigen Feststoffkomponente, die einen Träger a), eine Titanverbindung b) und eine Elektronendonorverbindung c) enthält, noch Cokatalysatoren in Form von organischen Aluminiumverbindungen d) und gegebenenfalls Elektronendonorverbindungen c') aufweisen. Es können aber auch Ziegler-Natta-Katalysatorsysteme auf der Basis von Metallocen-Katalysatorsystemen eingesetzt werden. Diese enthalten in der Regel einen anorganischen Träger A), mindestens einen Metallocenkomplex B), mindestens eine metalloceniumionenbildende Verbindung C) und gegebenenfalls mindestens eine organische Metallverbindung D) eines Alkali- oder Erdalkalimetalls oder eines Metalls der III. Hauptgruppe des Periodensystems.

Zur Herstellung der titanhaltigen Feststoffkomponente der Ziegler-Natta-Katalysatorsysteme werden als Titanverbindungen b) im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger a), wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter werden bei der Herstellung der titanhaltigen Feststoffkomponente u.a. Verbindungen des Magnesiums a') eingesetzt. Als solche kommen vor allem Magnesiumhalogenide wie insbesondere Chloride oder Bromide oder Magnesiumverbindungen, aus denen die Halogenide in üblicher Weise, z.B. durch Umsetzung mit Chlorwasserstoff oder Chlor, hergestellt werden können wie beispielsweise Magnesiumalkyle und Magnesiumaryle sowie Magnesiumalkoxy- und Magnesiumaryloxyverbindungen, in Betracht. Bevorzugt werden Magnesiumdichlorid, Magnesiumdibromid und Magnesiumdi-(C₁-C₁₀-alkyl)-Verbindungen verwendet. Es ist auch möglich, den übergangsmetallhaltigen Katalysatorfeststoff des Ziegler-Natta-Katalysatorsystems ohne Träger a) ausschließlich auf Basis von Magnesiumverbindungen a') herzustellen.

Außerdem werden bei der Herstellung der titanhaltigen Feststoffkomponente in der Regel noch Elektronendonorverbindungen c), beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen verwendet. Bevorzugt werden als Elektronendonorverbindungen c) innerhalb der titanhaltigen Feststoffkomponente Phthalsäurederivate der allgemeinen Formel I 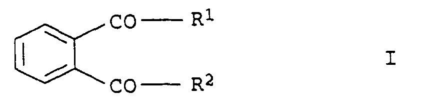 eingesetzt, wobei R¹ und R² jeweils für Chlor oder einen C₁- bis C₁₀-Alkoxyrest oder gemeinsam für Sauerstoff stehen. Besonders bevorzugte Elektronendonorverbindungen sind Phthalsäureester, wobei R¹ und R² C₁-C₈-Alkoxyreste, beispielsweise Methoxy-, Ethoxy-, Propyloxy- oder Butyloxyreste bedeuten.

Weiter bevorzugte Elektronendonorverbindungen c) innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das aus der US-A 5 288 824 bekannte Verfahren angewandt.

Die auf diese Weise erhältliche titanhaltige Feststoffkomponente wird mit Cokatalysatoren als Ziegler-Katalysatorensystem verwendet. Als Cokatalysatoren kommen dabei organische Aluminiumverbindungen d) und Elektronendonorverbindungen c') in Betracht.

Geeignete Aluminiumverbindungen d) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung d) noch als weiteren Cokatalysator Elektronendonorverbindungen c') wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Verbindungen c') sind siliciumorganische Verbindungen der allgemeinen Formel II

R³ ₙSi(OR⁴)₄₋ₙ II

wobei R³ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R⁴ gleich oder verschieden ist und eine C₁- bis C₂₀-Alkylgruppe bezeichnet und n für die Zahlen 1, 2 oder 3 steht. Besonders bevorzugt werden solche Verbindungen, in denen R³ eine C₁- bis C₈-Alkylgruppe oder eine 5-bis 7-gliedrige Cycloalkylgruppe, R⁴ eine C₁- bis C₄-Alkylgruppe und n die Zahlen 1 oder 2 bedeuten.

Unter diesen Verbindungen sind Dimethoxydiisopropylsilan, Dimethoxyisopropyl-sek.-butylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung d) und Titan aus der titanhaltigen Feststoffkomponente 1:1 bis 800:1, insbesondere 2:1 bis 200:1, und das Molverhältnis zwischen der Aluminiumverbindung d) und der als Cokatalysator eingesetzten Elektronendonorverbindung c') 1:1 bis 100:1, insbesondere 2:1 bis 80:1 beträgt.

Die Komponenten a), a'), b) und c) bilden zusammen den übergangsmetallhaltigen Katalysatorfeststoff, der zusammen mit d) und gegebenenfalls c') das Ziegler-Natta-Katalysatorsystem darstellt. Die Katalysatorbestandteile d) und gegebenenfalls c') können zusammen mit der titanhaltigen Feststoffkomponente oder als Gemisch oder auch in beliebiger Reihenfolge einzeln in den Polymerisationsreaktor eingebracht werden.

Die im erfindungsgemäßen Verfahren einsetzbaren Metallocen-Katalysatorsysteme enthalten in der Regel einen anorganischen Träger A), mindestens einen Metallocenkomplex B), mindestens eine metalloceniumionenbildende Verbindung C) und gegebenenfalls mindestens eine organische Metallverbindung D) eines Alkali- oder Erdalkalimetalls oder eines Metalls der III. Hauptgruppe des Periodensystems.

Als Komponente A) des Metallocen-Katalysatorsystems können im wesentlichen die gleichen anorganischen Träger wie als Komponente a) der Ziegler-Natta-Katalysatorsysteme eingesetzt werden.

Es werden vorzugsweise pro Gramm Träger, d.h. der Komponente A), 0,1 bis 10000 µmol, insbesondere 5 bis 200 µmol des Metallocenkomplexes, d.h. der Komponente B) eingesetzt.

Als Komponente B) enthält das Metallocen-Katalysatorsystem mindestens einen oder mehrere Metallocenkomplexe. Hierbei eignen sich besonders solche der allgemeinen Formel III 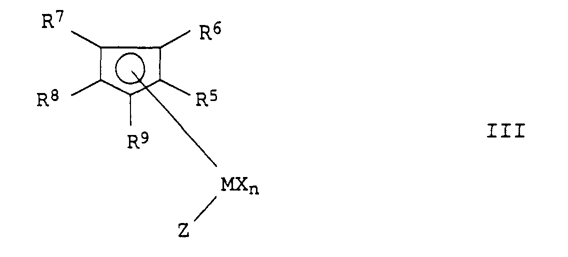 in der die Substituenten folgende Bedeutung haben:
- M: Titan, Zirkonium, Hafnium, Vanadium, Niob oder Tantal, sowie Elemente der III. Nebengruppe des Periodensystems und der Lanthanoiden,
- x: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
- n: eine ganze Zahl zwischen 1 und 3, wobei n der Wertigkeit von M minus der Zahl 2 entspricht,
wobei
- R¹⁰ und R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R⁵ bis R⁹: Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können, oder Si(R¹²)₃ mit
- R¹²: C₁- bis C₁₀-Alkyl, C₃- bis C₁₀-Cycloalkyl oder C₆- bis C₁₅-Aryl sein kann und
- Z: für X oder 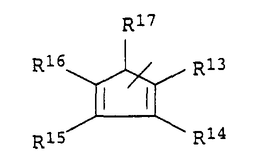 steht,
wobei die Reste
- R¹³ bis R¹⁷: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁸)₃ mit
- R¹⁸: C₁- bis C₁₀-Alkyl, C₆- bis C₁₅-Aryl oder C₃- bis C₁₀-Cycloalkyl bedeuten,
oder wobei die Reste R⁸ und Z gemeinsam eine Gruppierung -R¹⁹-Abilden, in der
- R¹⁹: 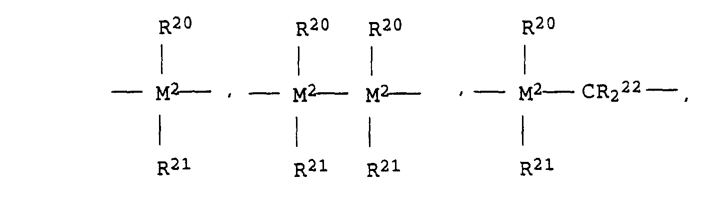 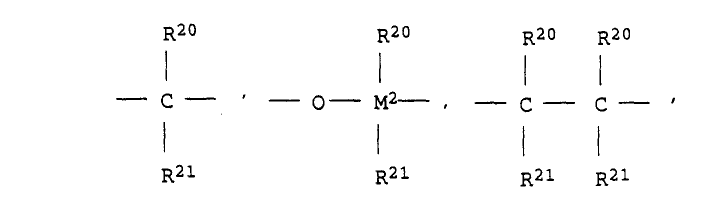 = BR²⁰, = AlR²⁰, -Ge-, -Sn-, -O-, -S-, = SO, = SO₂, = NR²⁰, = CO, = PR²⁰ oder = P(O)R²⁰ ist,
wobei
- R²⁰, R²¹ und R²²: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: ―O―, ―S―, 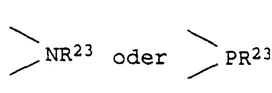 bedeuten, mit
- R²³: C₁- bis C₁₀-Alkyl, C₆- bis C₁₅-Aryl, C₃- bis C₁₀-Cycloalkyl, Alkylaryl oder Si(R²⁴)₃,
- R²⁴: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁸ und R¹⁶ gemeinsam eine Gruppierung -R¹⁹bilden.

Von den Metallocenkomplexen der allgemeinen Formel III sind 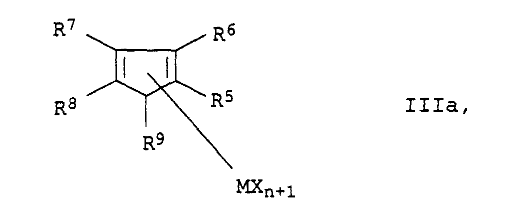 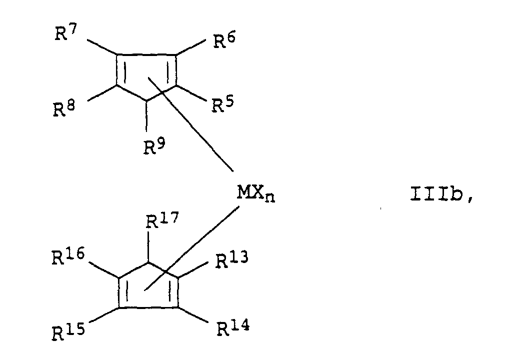 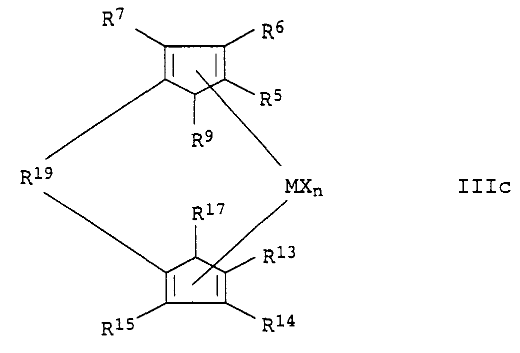 und 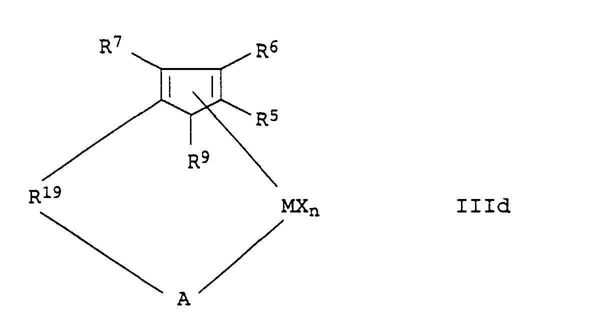 bevorzugt.

Die Reste X können gleich oder verschieden sein, bevorzugt sind sie gleich.

Von den Verbindungen der Formel IIIa sind insbesondere diejenigen bevorzugt, in denen
- M: Titan, Zirkonium oder Hafnium,
- X: Chlor, C₁-bis C₄-Alkyl oder Phenyl,
- n: die Zahl 2 und
- R⁵ bis R⁹: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium steht,
- X: Chlor, C₁-bis C₄-Alkyl oder Phenyl,
- n: die Zahl 2,
- R⁵ bis R⁹: Wasserstoff, C₁- bis C₄-Alkyl oder Si(R¹²)₃,
- R¹³ bis R¹⁷: Wasserstoff, C₁- bis C₄-Alkyl oder Si(R¹⁸)₃ bedeuten.

Insbesondere sind die Verbindungen der Formel IIIb geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
sowie die entsprechenden Dimethylzirkoniumverbindungen.

Von den Verbindungen der Formel IIIc sind diejenigen besonders geeignet, in denen
- R⁵ und R¹³: gleich sind und für Wasserstoff oder C₁- bis C₁₀-Alkylgruppen stehen,
- R⁹ und R¹⁷: gleich sind und für Wasserstoff, eine Methyl-, Ethyl-, iso-Propyl- oder tert.-Butylgruppe stehen,
- R⁶, R⁷, R¹⁴ und R¹⁵: die Bedeutung
R⁷ und R¹⁵ C₁- bis C₄-Alkyl
R⁶ und R¹⁴ Wasserstoff
haben oder zwei benachbarte Reste R⁶ und R⁷ sowie R¹⁴ und R¹⁵ gemeinsam für 4 bis 12 C-Atome aufweisende cyclische Gruppen stehen,
- R¹⁹: für 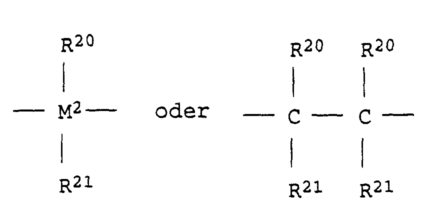 steht,
- M: für Titan, Zirkonium oder Hafnium und
- X: für Chlor, C₁- bis C₄-Alkyl oder Phenyl stehen.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(3-tert.butyl-5-methylcyclopentadienyl)-zirkoniumdichlorid, Dimethylsilandiylbis(3-tert.butyl-5-ethylcyclopentadienyl)-zirkoniumdichlorid, Dimethylsilandiylbis(2-methylindenyl)-zirkoniumdichlorid, Dimethylsilandiylbis(2-isopropylindenyl)-zirkoniumdichlorid, Dimethylsilandiylbis(2-tert.butylindenyl)-zirkoniumdichlorid, Diethylsilandiylbis(2-methylindenyl)-zirkoniumdibromid, Dimethylsilandiylbis(3-methyl-5-methylcyclopentadienyl)-zirkoniumdichlorid, Dimethylsilandiylbis(3-ethyl-5-isopropylcyclopentadienyl)-zirkoniumdichlorid, Dimethylsilandiylbis(2-ethylindenyl)-zirkoniumdichlorid, Dimethylsilandiylbis(2-methylbenzindenyl)-zirkoniumdichlorid Dimethylsilandiylbis(2-ethylbenzindenyl)zirkoniumdichlorid, Methylphenylsilandiylbis(2-ethylbenzindenyl)zirkoniumdichlorid, Methylphenylsilandiylbis(2-methylbenzindenyl)zirkoniumdichlorid, Diphenylsilandiylbis(2-methylbenzindenyl)zirkoniumdichlorid, Diphenylsilandiylbis(2-ethylbenzindenyl)zirkoniumdichlorid, und Diphenylsilandiylbis(2-methylindenyl)-hafniumdichlorid sowie die entsprechenden Dimethylzirkoniumverbindungen.

Weitere Beispiele für geeignete Komplexverbindungen sind u.a. Dimethylsilandiylbis(2-methyl-4-phenylindenyl)zirkoniumdichlorid, Dimethylsilandiylbis(2-methyl-4-naphthylindenyl)zirkoniumdichlorid, Dimethylsilandiylbis(2-methyl-4-isopropylindenyl)zirkoniumdichlorid und Dimethylsilandiylbis(2-methyl-4,6-diisopropylindenyl)zirkoniumdichlorid sowie die entsprechenden Dimethylzirkoniumverbindungen.

Bei den Verbindungen der allgemeinen Formel IIId sind als besonders geeignet diejenigen zu nennen, in denen
- M: für Titan oder Zirkonium,
- X: für Chlor, C₁-bis C₄-Alkyl oder Phenyl stehen.
- R¹⁹: für 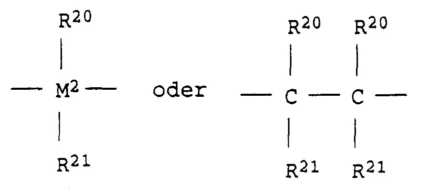 steht,
- A: für ―O―, ―S―, 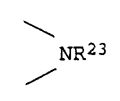
und
- R⁵ bis R⁷ und R⁹: für Wasserstoff, C₁- bis C₁₀-Alkyl, C₃- bis C₁₀-Cycloalkyl, C₆- bis C₁₅-Aryl oder Si(R¹²)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente C) enthält das Metallocen-Katalysatorsystem eine metalloceniumionenbildende Verbindung.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M³X¹X²X³ IV

bevorzugt, in der
- M³: ein Element der III. Hauptgruppe des Periodensystems bedeutet, insbesondere B, Al oder Ga, vorzugsweise B,
- X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+})Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q₂: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen der allgemeinen Formeln IV und V beträgt bevorzugt 0,1 bis 10 Äquivalente, bezogen auf den Metallocenkomplex B).

Besonders geeignet als metalloceniumionenbildende Verbindung C) sind offenkettige oder cyclische Alumoxanverbindungen der allgemeinen Formel VI oder VII 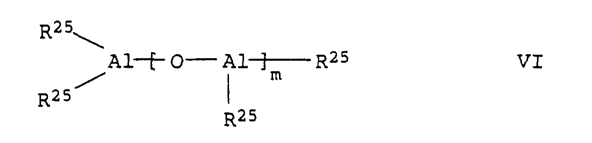 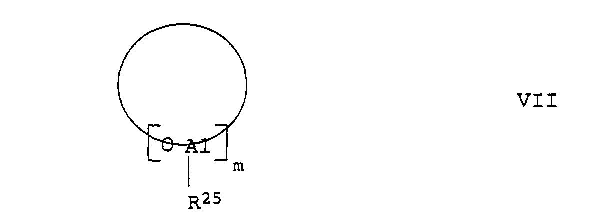 wobei
- R²⁵: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe B) und die oligomeren Alumoxanverbindungen der allgemeinen Formeln VI oder VII in solchen Mengen zu verwenden, daß das atomare Verhältnis zwischen Aluminium aus den oligomeren Alumoxanverbindungen und dem Übergangsmetall aus den Metallocenkomplexen im Bereich von 10:1 bis 10⁶:1, insbesondere im Bereich von 10:1 bis 10⁴:1, liegt.

Weiterhin können als Komponente C) anstelle der Alumoxanverbindungen der allgemeinen Formeln VI oder VII Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Vorzugsweise werden sowohl die Metallocenkomplexe (Komponente B) als auch die metalloceniumionenbildende Verbindungen (Komponente C) in Lösung eingesetzt, wobei aromatische Kohlenwasserstoffe mit 6 bis 20 C-Atomen, insbesondere Xylole und Toluol, besonders bevorzugt sind.

Das eingesetzte Metallocen-Katalysatorsystem kann als weitere Komponente D) gegebenenfalls noch eine Metallverbindung der allgemeinen Formel VIII

M¹ (R²⁶)ᵣ (R²⁷)ₛ (R²⁸)ₜ VIII

in der
- M¹: ein Alkali-, ein Erdalkalimetall oder ein Metall der III. Hauptgruppe des Periodensystems, d.h. Bor, Aluminium, Gallium, Indium oder Thallium bedeutet,
- R²⁶: Wasserstoff, C₁- bis C₁₀-Alkyl, C₆- bis C₁₅-Aryl, Alkylaryl oder Arylalkyl mit jeweils 1 bis 10 C-Atom im Alkylrest und 6 bis 20 C-Atomen im Arylrest,
- R²⁷ und R²⁸: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M¹ entspricht,
enthalten.

Von den Metallverbindungen der allgemeinen Formel VIII sind diejenigen bevorzugt, in denen
- M¹: Lithium, Magnesium oder Aluminium bedeutet und
- R²⁷ bis R²⁸: für C₁- bis C₁₀-Alkyl stehen.

Besonders bevorzugte Metallverbindungen der Formel VIII sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Komponente D) eingesetzt wird, ist sie bevorzugt in einer Menge von 800:1 bis 1:1, insbesondere 500:1 bis 50:1 (molares Verhältnis von M¹ aus VIII zu Übergangsmetall M aus III) im Katalysatorsystem enthalten.

Die Komponenten A) und B) des Metallocen-Katalysatorsystems bilden zusammen den übergangsmetallhaltigen Katalysatorfeststoff, der jedoch zusätzlich noch weitere Komponenten C) und D) des Metallocen-Katalysatorsystems enthalten kann. In der Regel werden bei der Polymerisation neben dem übergangsmetallhaltigen Katalysatorfeststoff noch weitere Komponenten C) und/oder D) separat zugegeben.

Derartige Katalysatorsysteme aus den Komponenten a), a'), b), c), d) und gegebenenfalls c') bzw. aus den Komponenten A), B), C) und D) werden vorzugsweise in dem erfindungsgemäßen Verfahren zur Polymerisation von C₂-C₈-Alk-1-enen verwendet.

Die Komponenten d) und gegebenenfalls c') bzw. C) und D) der verwendeten Katalysatorsysteme, die nicht in den übergangsmetallhaltigen Katalysatorfeststoffen enthalten sind, können zusammen mit der übergangsmetallhaltigen Feststoffkomponente mit demselben C₂-C₈-Alk-1-enstrom oder separat entweder als Gemisch oder auch in beliebiger Reihenfolge einzeln in den Polymerisationsreaktor eingebracht werden.

Abgesehen von der erfindungsgemäßen Zugabeweise des übergangsmetallhaltigen Katalysatorfeststoffs wird die Polymerisation unter üblichen Reaktionsbedingungen bei Temperaturen von 40 bis 120°C und Drücken von 1 bis 100 bar vorgenommen. Bevorzugt sind Temperaturen von 40 bis 100°C und Drücke von 10 bis 50 bar. Die Molmasse der gebildeten Polymerisate der C₂-C₈-Alk-1-ene kann durch die Zugabe von in der Polymerisationstechnik üblichen Reglern, beispielsweise von Wasserstoff, kontrolliert und eingestellt werden. Die Polymerisate der C₂-C₈-Alk-1-ene weisen in der Regel einen Schmelzflußindex von 0,1 bis 100 g/10 min., bei 230°C und unter einem Gewicht von 2,16 kg, auf. Der Schmelzflußindex entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird. Besonders bevorzugt sind dabei solche Propylenpolymerisate, deren Schmelzflußindex 0,1 bis 20 g/10 min, bei 230°C und unter einem Gewicht von 2,16 kg, beträgt.

Wird das erfindungsgemäße Verfahren in einer zweistufige Polymerisation in zwei Reaktoren durchgeführt, sind im ersten Reaktor Drücke von 17 bis 35 bar und Temperaturen von 65 bis 110°C und im zweiten Reaktor Drücke von 10 bis 25 bar und Temperaturen von 40 bis 80°C bevorzugt. Als Molmassenregler kann in beiden Reaktoren Wasserstoff verwendet werden. Der Druck im ersten Reaktor sollte vorteilhaft mindestens 10 bar, insbesondere mindestens 7 bar höher sein als der Druck im zweiten Reaktor.

Die mittleren Verweilzeiten liegen im allgemeinen bei 0,5 bis 5 Stunden, bevorzugt 0,6 bis 4 Stunden und insbesondere 0,7 bis 3 Stunden. Bei mehrstufigen Polymerisationen betragen sie in der Regel im ersten Reaktor 0,5 bis 5 Stunden und im zweiten Reaktor 0,25 bis 4 Stunden und besonders bevorzugt im ersten Reaktor 0,7 bis 3 Stunden und im zweiten Reaktor 0,35 bis 2,5 Stunden.

Mit Hilfe des erfindungsgemäßen Verfahrens können C₂-C₈-Alk-1-ene in Anwesenheit eines Ziegler-Natta- oder Metallocen-Katalysatorsystems mit einer deutlich besseren Einmischung der übergangsmetallhaltigen Feststoffkomponente polymerisiert werden. Dadurch werden die Einmischzeiten reduziert. Vor allem ergibt sich hierdurch eine wesentlich bessere und homogenere Temperaturverteilung, aus der eine deutliche Steigerung der Produktivität resultiert. Besonders eignet sich das Verfahren zur Herstellung von statistischen Copolymerisaten des Propylens mit untergeordneten Anteilen an Comonomeren wie Ethylen und/oder But-1-en.

Mittels des erfindungsgemäßen Verfahrens bzw. der erfindungsgemäßen Vorrichtung können verschiedene Arten von Polymerisaten von C₂-C₈-Alk-1-enen hergestellt werden, beispielsweise Homopolymerisate, Copolymerisate oder Gemische aus derartigen Polymerisaten.

Diese eigenen sich vor allem zur Herstellung von Folien, Fasern und Formkörpern.

### Beispiele

### Beispiel 1

Zur Herstellung eines Polypropylenhomopolymerisats wurde ein Reaktor mit einem Rauminhalt von 12,5 m³, der einen frei tragenden Wendelrührer aufweist, eingesetzt. Der Reaktor war mit etwa 3,2 t eines pulverförmigen Propylenhomopolymerisats gefüllt, das mit Hilfe des Wendelrührers bei einer Drehzahl von ca. 40 Umdrehungen pro Minute in Bewegung gehalten wurde.

In diesem Reaktor wurde bei einem Druck von 30 bar und einer Temperatur von 80°C ein Propylenhomopolymerisat hergestellt. Dabei wurde als Katalysatorsystem ein nach der Lehre der US-A 5 288 824 hergestellter titanhaltiger Katalysatorfeststoff zusammen mit den Katalysatorkomponenten Triethylaluminium d) und Isobutylisopropyldimethoxysilan c') eingesetzt. Zur Molmassenregelung wurde hochreiner Wasserstoff hinzudosiert.

Das gebildete feinkörnige, trockene Polymerisat wurde nach einer durchschnittlichen Verweilzeit von 2 h mit nicht umgesetztem Monomer quasikontinuierlich durch sich periodisch kurzzeitig öffnende Austragshähne aus dem Reaktor ausgetragen. Die Austragsfrequenz wurde über eine radiometrische Füllstandsmessung geregelt.

Die Zugabe des titanhaltigen Katalysatorfeststoffs erfolgte mit dem frisch zugesetzten Propylen über ein in der Mitte des Reaktors senkrecht von oben in den Gasraum des Reaktors hineinragendes Rohr, wobei der Abstand des Rohrendes von dem pulverförmigen Reaktorbett je nach Reaktorfüllstand 5 - 10 % des Abstands zwischen dem Reaktorbett und dem oberen Reaktorende betrug.

Das erhaltene pulverförmige Propylenhomopolymerisat wies einen Schmelzflußindex, bei 2,16 kg und 230°C, von 13,1 g/10 min (nach ISO 1133) auf.

Die Produktivität des Katalysatorsystems wurde auf der Basis der Bestimmung des Restgehaltes an Chlor im Produkt in Relation zum Chlorgehalt der titanhaltigen Feststoffkomponente ermittelt. Sie ist in der nachfolgenden Tabelle wiedergegeben.

Die Temperaturverteilung im Reaktor wurde mittels zweier senkrecht in das pulverförmige Reaktionsbett hineinragender Stäbe, an denen jeweils 12 Temperaturmeßstellen in gleichen Abständen befestigten waren, bestimmt. Als Maß für die Temperaturinhomogenität wurde die durchschnittliche Temperaturdifferenz zwischen den Meßstellen mit der höchsten und der niedrigste Temperatur ausgewertet, die noch in das pulverförmige Reaktionsbett vollständig eintauchten. Diese Temperaturdifferenz ist der nachfolgenden Tabelle zu entnehmen.

### Vergleichsbeispiel A

Analog Beispiel 1 wurde in einem Gasphasenreaktor mit einem Rauminhalt von 12,5 m³ Propylen mit demselben Katalysatorsystem homopolymerisiert, jedoch wurde das frisch zugesetzte Propylen zusammen mit dem titanhaltigen Katalysatorfeststoff von der Seite in den Reaktor eingetragen, wobei die Zugabe ungefähr auf der mittleren Höhe des pulverförmigen Reaktorbetts erfolgte.

Das erhaltene pulverförmige Propylenhomopolymerisat wies einen Schmelzflußindex, bei 2,16 kg und 230°C, von 12,7 g/10 min (nach ISO 1133) auf.

Die Produktivität des Katalysators sowie die Temperaturinhomogenität sind in der nachfolgenden Tabelle wiedergegeben.

### Beispiel 2

Zur Herstellung eines statistischen Propylen-Ethylen-Copolymerisats wurde ein Reaktor mit einem Rauminhalt von 12,5 m³, der einen frei tragenden Wendelrührer aufweist, eingesetzt. Der Reaktor war mit etwa 3,2 t eines pulverförmigen Propylen-Ethylen-Copolymerisat gefüllt, das mit Hilfe des Wendelrührers bei einer Drehzahl von ca. 40 Umdrehungen pro Minute in Bewegung gehalten wurde.

Dabei wurde als Katalysatorsystem ein nach der Lehre der US-A 5 288 824 hergestellter titanhaltiger Katalysatorfeststoff zusammen mit den Katalysatorkomponenten Triethylaluminium d) und Isobutylisopropyldimethoxysilan c') eingesetzt. Zur Molmassenregelung wurde hochreiner Wasserstoff hinzudosiert.

Das Propylen-Ethylen-Copolymerisat wurde bei einem Druck von 25 bar und einer Temperatur von 80°C polymerisiert. Die Zugabe des titanhaltigen Katalysatorfeststoffs erfolgte mit dem frisch zugesetzten Propylen über ein in der Mitte des Reaktors senkrecht von oben in den Gasraum des Reaktors hineinragendes Rohr, wobei der Abstand des Rohrendes von dem pulverförmigen Reaktorbett je nach Reaktorfüllstand 5 - 10 % des Abstands zwischen dem Reaktorbett und dem oberen Reaktorende betrug. Gleichzeitig wurde in den Reaktor soviel gasförmiges Ethylen eingeleitet, daß im Reaktor das Verhältnis zwischen dem Partialdruck des Propylens und dem des Ethylens konstant 89 : 1 betrug.

Das gebildete feinkörnige, trockene Polymerisat wurde nach einer durchschnittlichen Verweilzeit von 2 h mit nicht umgesetztem Monomer quasikontinuierlich durch sich periodisch kurzzeitig öffnende Austragshähne aus dem Reaktor ausgetragen. Die Austragsfrequenz wurde über eine radiometrische Füllstandsmessung geregelt.

Das erhaltene pulverförmige Propylen-Ethylen-Copolymerisat wies einen Schmelzflußindex, bei 2,16 kg und 230°C, von 8,4 g/10 min (nach ISO 1133) auf.

Der Produktivität des Katalysatorsystems und die Bestimmung der Temperaturinhomogenität erfolgte analog Beispiel 1. Die Werte können der Tabelle entnommen werden.

### Vergleichsbeispiel B

Analog Beispiel 2 wurden in einem Gasphasenreaktor mit einem Rauminhalt von 12,5 m³ Propylen und Ethylen mit demselben Katalysatorsystem copolymerisiert, jedoch wurde das frisch zugesetzte Propylen zusammen mit dem titanhaltigen Katalysatorfeststoff analog Vergleichsbeispiel A eingetragen.

Das erhaltene pulverförmige Propylen-Ethylen-Copolymerisat wies einen Schmelzflußindex, bei 2,16 kg und 230°C, von 7,6 g/10 min (nach ISO 1133) auf.

Die Produktivität des Katalysators sowie die Temperaturinhomogenität sind in der nachfolgenden Tabelle wiedergegeben.

**Tabelle**

| | Beispiel 1 | Vergleichsbeispiel 1 | Beispiel 2 | Vergleichsbeispiel 2 |
|---|---|---|---|---|
| Produktivität des Katalysators (g PP/g titanhaltige Feststoffkomponente) | 21.200 | 15.800 | 24.800 | 18.400 |
| Temperaturinhomogenität (°C) | 3 | 9 | 5 | 11 |

Aus den in der Tabelle angegebenen Werten wird ersichtlich, daß durch die erfindungsgemäße Katalysatorzugabe eine wesentlich bessere Produktivität erhalten wird, und die Temperaturinhomogenität im Reaktor geringer wird.

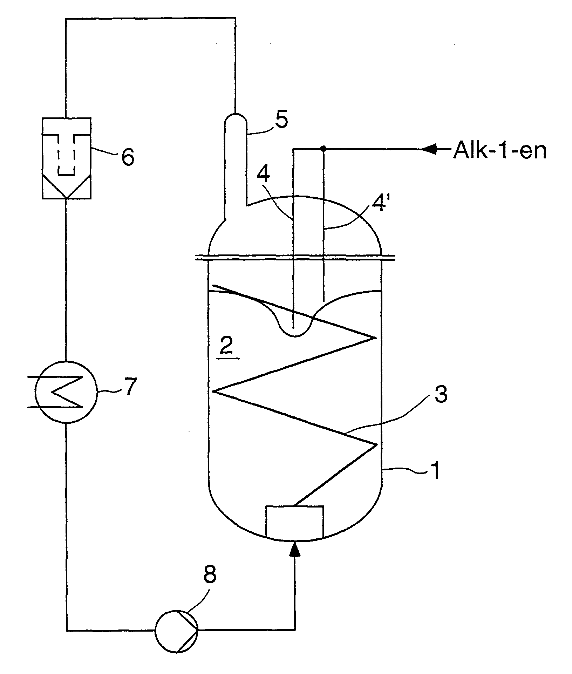

## Patentansprüche

1. Verfahren zur Homo- oder Copolymerisation von C₂-C₈-Alk-1-enen mittels eines Ziegler-Natta- oder eines Metallocen-Katalysatorsystems in einem gerührten Bett aus feinteiligem Polymerisat aus der Gasphase, wobei der übergangsmetallhaltige Katalysatorfeststoff des Ziegler-Natta- oder Metallocen-Katalysatorsystems durch in den Reaktor dosiertes C₂-C₈-Alk-1-en dem Reaktor zugeführt wird, **dadurch gekennzeichnet, daß** man den übergangsmetallhaltigen Katalysatorfeststoff zusammen mit mindestens einem Teil des C₂-C₈-Alk-1-ens durch ein oder mehrere Rohre, die senkrecht oder nahezu senkrecht von oben in den Gasraum hineinragen und oberhalb des pulverförmigen gerührten Reaktorbetts enden, dem Reaktor zugibt, dabei den vertikalen Abstand zwischen dem oder den Rohrenden und der Oberfläche des gerührten Reaktorbetts auf weniger als 15 % des Abstands zwischen dem oberen Reaktorende und dem gerührten Reaktorbett einstellt und weiterhin dafür sorgt, daß das oder die Eintragsrohr(e) radial gesehen in der Mitte des Reaktors oder leicht exzentrisch in der Weise enden, daß der horizontale Abstand zwischen dem oder den Rohrenden und der Reaktormitte weniger als 20 % des Radius des Reaktors beträgt.

2. Verfahren nach Anspruch 1, **dadurch gekennzeichnet, daß** der vertikale Abstand zwischen dem oder den Rohrenden und dem gerührten Reaktorbett weniger als 10 % des Abstands zwischen dem oberen Reaktorende und dem gerührten Reaktorbett beträgt.

3. Verfahren nach Anspruch 1, **dadurch gekennzeichnet, daß** der horizontale Abstand zwischen dem oder den Rohrenden und der Reaktormitte weniger als 15 % des Radius des Reaktors beträgt.

4. Verfahren nach den Ansprüchen 1 bis 3, **dadurch gekennzeichnet, daß** das pulverförmige Reaktorbett durch einen frei tragenden Wendelrührer in Bewegung gehalten wird.

5. Vorrichtung zur Homo- oder Copolymerisation von C₂-C₈-Alk-1-enen mittels eines Ziegler-Natta- oder eines Metallocen-Katalysatorsystems in einem gerührten Bett aus feinteiligem Polymerisat aus der Gasphase, wobei der übergangsmetallhaltige Katalysatorfeststoff des Ziegler-Nattaoder Metallocen-Katalysatorsystems durch in den Reaktor dosiertes C₂-C₈-Alk-1-en dem Reaktor zugeführt wird, **dadurch gekennzeichnet, daß** das oder die Rohre, durch die die Zugabe des übergangsmetallhaltigen Katalysatorfeststoffs zusammen mit mindestens einem Teil des C₂-C₈-Alk-1-ens erfolgt, von oben senkrecht oder nahezu senkrecht in den Gasraum hineinragen und oberhalb des pulverförmigen gerührten Reaktorbetts enden, darüber hinaus der vertikale Abstand zwischen dem oder den Rohrenden und der Oberfläche des pulverförmigen Reaktorbetts weniger als 15 % des Abstands zwischen dem oberen Reaktorende und dem gerührten Reaktorbett beträgt, und das oder die Eintragsrohr(e) radial gesehen in der Mitte des Reaktors oder leicht exzentrisch in der Weise enden, daß der horizontale Abstand zwischen dem oder den Rohrenden und der Reaktormitte weniger als 20 % des Radius des Reaktors beträgt.

## Claims

1. A process for the gas phase homo- or copolymerisation of C₂-C₈-1-alkenes by means of a Ziegler-Natta or a metallocene catalyst system in a stirred bed of a fine particulate polymer, the transition metal-containing catalyst solid of the Ziegler-Natta or metallocene catalyst system being introduced into the reactor by C₂-C₈-1-alkene metered into the reactor, **characterised in that** the transition metal-containing catalyst solid is added to the reactor together with a least one portion of the C₂-C₈-1-alkene through one or more tubes extending into the gas space vertically or almost vertically from above and ending above the stirred reactor bed in powder form, adjusting the vertical distance between the tube end(s) and the surface of the stirred reactor bed to less than 15 % of the distance between the top of the reactor and the stirred reactor bed and further ensuring that, from a radial point of view, the feed tube(s) end(s) in the centre of the reactor or slightly off-centre in such a manner that the horizontal distance between the tube end(s) and the centre of the reactor is less than 20 % of the radius of the reactor.

2. A process according to claim 1, **characterised in that** the vertical distance between the tube end(s) and the stirred reactor bed is less than 10 % of the distance between the top end of the reactor and the stirred reactor bed.

3. A process according to claim 1, **characterised in that** the horizontal distance between the tube end(s) and the reactor centre is less than 15 % of the radius of the reactor.

4. A process according to claims 1 to 3, **characterised in that** the powdery reactor bed is kept in motion by a self-supporting helical stirrer.

5. A device for the gas phase homo- or copolymerisation of C₂-C₈-1-alkenes by means of a Ziegler-Natta or a metallocene catalyst system in a stirred bed of a fine particulate polymer, the transition metal-containing catalyst solid of the Ziegler-Natta or metallocene catalyst system being introduced into the reactor by C₂-C₈-1-alkene metered into the reactor, **characterised in that** the tube(s) through which the transition metal-containing catalyst solid is introduced together with a least one portion of the C₂-C₈-1-alkene extend(s) into the gas space vertically or almost vertically from above and end(s) above the stirred reactor bed in powder form, the vertical distance between the tube end(s) and the surface of the reactor bed in powder form is less than 15 % of the distance between the top end of the reactor and the stirred reactor bed, and that, from a radial point of view, the feed tube(s) end(s) in the centre of the reactor or slightly off-centre in such a manner that the horizontal distance between the tube end(s) and the centre of the reactor is less than 20 % of the radius of the reactor.

## Revendications

1. Procédé d'homo- ou copolymérisation en phase gazeuse d'alc-1-ènes en C₂-C₈ à l'aide d'un système de catalyseur de type Ziegler-Natta ou métallocène dans un lit agité de polymérisat finement divisé, dans lequel on introduit le solide catalyseur du système de catalyseur contenant un métal de transition de type Ziegler-Natta ou métallocène dans le réacteur à travers l'alc-1-ène en C₂-C₈ introduit de façon dosée dans le réacteur, **caractérisé en ce que** l'on ajoute le solide catalyseur contenant un métal de transition dans le réacteur en même temps qu'au moins une partie de l'alc-1-ène en C₂-C₈ par un ou plusieurs tubes qui descendent verticalement ou presque verticalement dans la zone gazeuse et se terminent au-dessus du lit agité pulvérulent du réacteur, la distance verticale entre l'extrémité du tube ou des tubes et la surface du lit agité du réacteur étant de moins de 15 % de la distance entre l'extrémité supérieure du réacteur et le lit agité du réacteur, et en veillant en outre à ce que le ou les tubes d'introduction se terminent de façon radiale au centre du réacteur ou en une position légèrement excentrique de sorte que la distance horizontale entre l'extrémité du tube ou des tubes et le centre du réacteur soit inférieure à 20 % du rayon du réacteur.

2. Procédé selon la revendication 1, **caractérisé en ce que** la distance verticale entre l'extrémité du tube ou des tubes et le lit agité du réacteur soit inférieure à 10 % de la distance entre l'extrémité supérieure du réacteur et le lit agité du réacteur.

3. Procédé selon la revendication 1, **caractérisé en ce que** la distance horizontale entre l'extrémité du tube ou des tubes et le centre du réacteur soit inférieure à 15 % du rayon du réacteur.

4. Procédé selon les revendications 1 à 3, **caractérisé en ce que** le lit pulvérulent du réacteur est maintenu en mouvement par un agitateur hélicoïdal en porte-à-faux.

5. Dispositif pour l'homo- ou copolymérisation en phase gazeuse d'alc-1-ènes en C₂-C₈ à l'aide d'un système de catalyseur de type Ziegler-Natta ou métallocène dans un lit agité de polymérisat finement divisé, dans lequel on introduit le solide catalyseur du système de catalyseur contenant un métal de transition de type Ziegler-Natta ou métallocène dans le réacteur à travers l'alc-1-ène en C₂-C₈ introduit de façon dosée dans le réacteur, **caractérisé en ce que** le ou les tubes par lesquels s'effectue l'addition du solide catalyseur contenant un métal de transition avec au moins une partie de l'alc-1-ène en C₂-C₈ descendent verticalement ou presque verticalement dans la zone gazeuse et se terminent au-dessus du lit agité pulvérulent du réacteur et **en ce que**, de plus, la distance verticale entre l'extrémité du tube ou des tubes et la surface du lit agité du réacteur est inférieure à 15 % de la distance entre l'extrémité supérieure du réacteur et le lit agité du réacteur, et le ou les tubes d'introduction se terminent de façon radiale au centre du réacteur ou en une position légèrement excentrique de sorte que la distance horizontale entre l'extrémité du tube ou des tubes et le centre du réacteur soit inférieure à 20 % du rayon du réacteur.
